# EUROPÄISCHE PATENTANMELDUNG

(11) **EP 0 614 707 A1**
(43) Veröffentlichungstag der Anmeldung: **14.09.1994**
(21) Anmeldenummer: 94250005.9
(22) Anmeldetag: 18.01.1994
(51) Int. Cl.: B08B 9/02, B08B 7/00, B44D 3/16

(54) **Verfahren und Vorrichtung zur Entfernung einer organischen Beschichtung auf metallischen Hohlkörpern**

(30) Priorität: 10.02.1993 DE 4304551
(71) Anmelder: MANNESMANN Aktiengesellschaft, D-40213 Düsseldorf (DE)
(72) Erfinder: Förster, Herbert, D-40470 Düsseldorf (DE); Hofmann, Georg, D-40489 Düsseldorf (DE); Reineking, Klaus-Jürgen, D-45478 Mülheim (DE)
(74) Vertreter: Presting, Hans-Joachim, Dipl.-Ing.

(57) **Zusammenfassung**

Bei einem Verfahren zur Entfernung einer organischen Beschichtung auf metallischen Hohlkörpern, insbesondere auf Stahlrohren (6), die mit einer Epoxyharzgrundschicht und einer darauf angeordneten Schicht aus Äthylen-Copolmerisat vorsehen sind, wobei die Oberfläche der Hohlkörper (6) mechanisch gereinigt wird für eine erneute Aufbringung einer organischen Beschichtung, wird erfindungsgemäß vorgeschlagen, daß die Wand der Hohlkörper (6) zunächst durch eine mittelfrequente induktive Erwärmung (1) gleichmäßig über die Wanddicke auf eine Temperatur von mindestens 200 und höchstens 350°C vorerwärmt wird, daß unmitelbar danach die Oberfläche der Beschichtung unter Anwesenheit von Sauerstoff hinsichtlich Intensität und Dauer in der Weise von außen erhitzt wird (2), daß es bei einer Temperatur von mindestens 400°C und höchstens 550°C in der Beschichtung zu deren thermischem Abbau kommt, ohne daß die sich einstellende Ausgleichstemperatur in der Wand der Hohlkörper (6) einen Wert von 400°C übersteigt, und daß danach die mechanische Reinigung (4) erfolgt.

## Beschreibung

Die Erfindung betrifft ein Verfahren zur Entfernung einer organischen Beschichtung auf metallischen Hohlkörpern gemäß dem Oberbegriff des Patentanspruchs 1 und eine Vorrichtung zur Durchführung dieses Verfahrens.

Metallische Hohlkörper, z.B. Stahlrohre, werden aus Gründen des Korrosionsschutzes an ihrer Außenoberfläche vielfach mit organischen Beschichtungen versehen. Gebräuchlich sind z.B. einschichtige Kunststoffüberzüge aus Epoxyharz von 0,01 bis 0,3 mm Dicke und auch mehrschichtige Überzüge, bei denen auf eine Epoxyharz-Grundschicht von z.B. 0,010 - 0,150 mm Dicke zunächst eine Kleberschicht aus einem Äthylen-Copolymerisat von z.B. 0,050 - 0,400 mm Dicke und anschließend eine Polyäthylen-Deckschicht von mindestens 1,5 mm Dicke aufgetragen werden. Anstelle von Polyäthylen kann beispielsweise auch Polypropylen (mit einem Propylen-Copolymerisat-Kleber) verwendet werden. Die Beschichtungsverfahren werden meistens in Form eines kontinuierlichen Durchlaufs des zu beschichtenden Hohlkörpers durch die Beschichtungsanlage betrieben. Ein solches Verfahren ist beispielsweise aus der DE-PS 31 22 043.6 bekannt. Durch Störungen im Betriebsablauf (z.B. plötzlicher Stillstand, Unterbrechung der Beschichtungsmaterialzufuhr, Anfahren der Anlage nach einem Dimensionswechsel usw.) kommt es hin und wieder zu stellenweise unzulänglichen Beschichtungsstellen auf der Oberfläche einzelner Hohlkörper. Dies führt dazu, daß die betroffenen Hohlkörper aus dem Produktionsprozeß ausgesteuert una einer Sonderbehandlung unterzogen werden müssen. Das bedeutet, daß der gesamte Hohlkörper neu zu beschichten ist, da eine Reparatur örtlich eng begrenzter Bereiche in der Regel nicht in Frage kommt. Im Falle der Beschichtung mit Polyäthylen oder Polypropylen wird hierzu zunächst die äußere Deckschicht abgezogen oder abgeschält. Die Kleberschicht und insbesondere die Grundschicht aus Epoxyharz bleiben jedoch weitestgehend auf der Metalloberfläche haften. Um bei der erneuten Beschichtung der betroffenen Hohlkörper mit größter Sicherheit einwandfreie Qualitäten zu erzielen, ist es erstrebenswert, auch die restlichen anhaftenden Teile der organischen Beschichtungsstoffe von der Metalloberfläche zu entfernen. Dabei wird ein Reinigungsgrad der Gütestufe Sa 2 1/2 oder besser gefordert. Insbesondere bei kunststoffbeschichteten Stahlrohren bereitet diese Reinigung große Probleme.

Eine Entfernung der Beschichtungsstoffe mit chemischen Mitteln (Lösungsmittel) ist wegen der anfallenden Abfallprodukte und des hohen Anlagenaufwandes von vornherein nicht erstrebenswert.

Als Alternative kommt grundsätzlich auch die rein mechanische Entfernung der Beschichtung in Frage, beispielsweise in Form eines Abtragens mittels rotierender Drahtbürsten. Dies ist jedoch ebenfalls sehr aufwendig und bereitet Schwierigkeiten, da thermoplastische Kunststoffe zum Schmieren neigen.

Aus der DE 41 24 084 A1 ist ein Verfahren zur Entfernung von Kunststoffbeschichtungen auf Rohren bekannt, bei dem nochenergetische Fluidstrahlen (z.B. Wasser) tangential auf die Rohroberfläche gerichtet und in Relativbewegung zur Beschichtung versetzt werden, so daß die Fluidstrahlen die Beschichtung einschneiden und abschälen. Die maschinelle Durchführung dieses Verfahrens erfordert neben nochwertigen Hochdruckpumpen und Spritzdüsen insbesondere auch eine wegen der erforderlichen Abtrennung von Beschichtungspartikeln aufwendige Abwasseraufbereitung. Hinzu kommt die Notwendigkeit, die abgeschälten Rohre vor einer Wiederbeschichtung sorgfältig zu trocknen und von zwischenzeitlich gebildetem Rost wieder zu befreien.

Eine weitere Möglichkeit besteht darin, die anhaftenden Beschichtungsstoffe durch eine thermische Behandlung abzubauen und die Reste mechanisch zu entfernen. Große Probleme ergeben sich jedoch dadurch, daß in den Wänden der metallischen Hohlkörper vielfach bei ihrer Herstellung ganz spezielle Werkstoffeigenschaften eingestellt wurden (z.B. durch thermomechanisches Walzen oder durch eine Wärmebehandlung), die beeinträchtigt oder sogar ganz verlorengehen würden, wenn die Hohlkörper auf eine unzulässig hohe Temperatur (z.B. über 500 oder 550°C) erwärmt werden. Dies wäre bei Stahlrohren beispielsweise der Fall, wenn man versuchen würde, die zum Abbau der anhaftenden Beschichtungsstoffe erforderliche Temperatur von mindestens 400°C über die erforderliche Zeit durch eine induktive Erwärmung der Stahlrohre einzustellen. Zu den gleichen unerwünschten Folgen würde auch eine Erwärmung in einem beispielsweise gasgefeuerten Ofen führen. Eine solche Behandlung durch Beflammung hätte allerdings den Vorteil gegenüber der induktiven Erwärmung, daß keine unvorhersehbaren Zersetzungsprodukte beim Abbau der Beschichtungsstoffe entstehen würden.

Aufgabe der Erfindung ist es, ein Verfahren vorzuschlagen, das kontinuierlich arbeitet und eine zuverlässige Entfernung aller Beschichtungsstoffe von der äußeren Oberfläche metallischer Hohlkörper, insbesondere von Stahlrohren, ermöglicht, ohne daß die Wände der Hohlkörper dabei so stark erwärmt werden, daß die eingestellten technologischen Eigenschaften des metallischen Werkstoffs unzulässig beeinträchtigt werden. Zusätzlich soll eine Vorrichtung zur Durchführung des Verfahrens angegeben werden.

Gelöst wird diese Aufgabe hinsichtlich des Verfahrens durch die Merkmale des Patentanspruchs 1. Vorteilhafte Weiterbildungen dieses Verfahrens sind in den Unteransprüchen 2 bis 10 angegeben. Eine Vorrichtung zur Durchführung des Verfahrens weist die Merkmale des Patentanspruchs 11 auf und läßt sich durch die kennzeichnenden Merkmale der Unteransprüche 12 und 13 zweckmäßig ausgestalten.

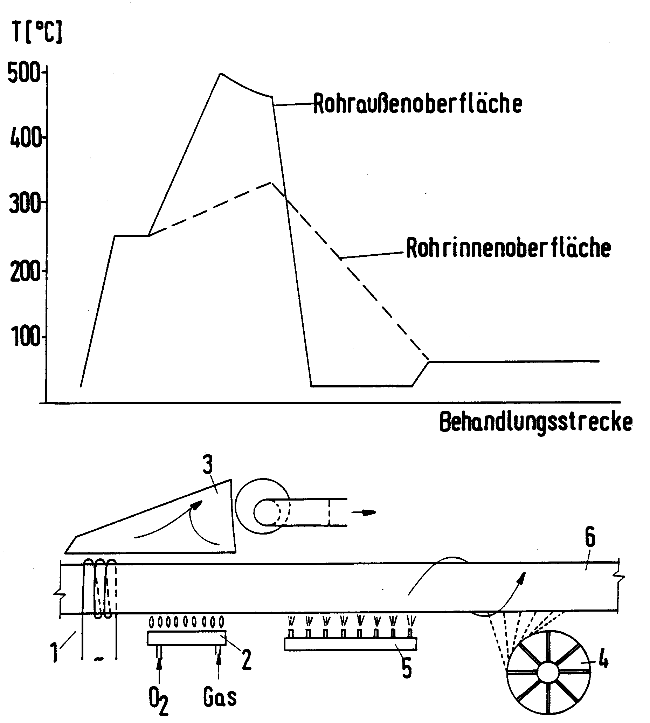

Nachfolgend wird die Erfindung anhand des in der Figur dargestellten Ausführungsbeispiels, das die Entfernung einer organischen Beschichtung von einem Stahlrohr in einer erfindungsgemäßen Behandlungsstrecke (Anlagenschema) zeigt, näher erläutert. Der Temperaturverlauf des Stahlrohrs, wie er sich beim Durchlauf durch die Behandlungsstrecke einstellt, ist in der Figur schematisch oberhalb der Behandlungsstrecke aufgetragen.

Ein Stahlrohr 6 von 159 mm Durchmesser, 4,5 mm Wanddicke und 8 m Länge, welches mit einer 3-Schicht-Isolierung aus einer Epoxyharz-Grundschicht von 0,050 mm Dicke, einer Äthylen-Copolymerisat-Kleberschicht von 0,150 mm Dicke und einer Polyähylen-Deckschicht von 2 mm Dicke versehen war, wurde nach Abschälen der Polyäthylen-Deckschicht in Längsrichtung horizontal in eine Induktionsspule 1 eingefahren. Die Induktionsspule 1 wurde mit einer Frequenz von 5000 Hz betrieben. Dabei betrug die Eindringtiefe des induzierten Stroms in der Rohrwand etwa 3,0 mm. Um eine schnelle und möglichst gleichmäßige Durchwärmung über die gesamte Wanddicke zu erzielen, sollte die Eindringtiefe jeweils mindestens 60 % der Wanddicke betragen. Das Stahlrohr 6 wurde mit einer Geschwindigkeit von 1,0 m/min durch die Anlage transportiert und dabei gleichzeitig mit 2 min⁻¹ um seine Längsachse gedrent. Die axiale Länge der Induktionsspule 1 betrug etwa 0,3 m, so daß die Teile der Rohrwand, die die Induktionsspule 1 bereits durchlaufen hatten, eine Temperatur von ca. 250°C aufwiesen. Über die Wanddicke gesehen ergab sich eine gleichmäßige Temperaturverteilung. Unmittelbar hinter der Induktionsspule 1 war eine Gasbrenneranlage 2 angeordnet, die mit Sauerstoffüberschuß und Propan als Brenngas betrieben wurde. Die Brenner der Gasbrenneranlage 2 waren unterhalb des Stahlrohrs 6 angebracht und erstreckten sich über eine axiale Länge von etwa 0,6 m. Durch die Gasflammen wurden die auf dem Stahlrohr 6 verbliebenen Beschichtungsstoffe bis auf eine Temperatur von etwa über 500°C erhitzt. Hierdurch stieg die Temperatur auf der äußeren Oberfläche des Stahlrohrs 6 ebenfalls an und erreichte bei Verlassen der Gasbrenneranlage 6 kurzzeitig einen Wert von max. 500°C. Infolge der Wärmeleitung stieg auch die Temperatur an der Innenoberfläche des Stahlrohrs 6 an. Sie erreichte einen Maximalwert von etwa 350°C, der sich erst kurz hinter der Gasbrenneranlage 2 einstellte. Die mittlere Temperatur in der Rohrwand blieb stets unter 400°C. Die während der Erhitzung der Beschichtungsstoffe und des dadurch verursachten thermischen Abbaus unter gleichzeitigem Ablauf von Oxidationsvorgängen freigesetzten Gase wurden von einer über dem Stahlrohr 6 angebrachten Absauganlage 3 vollständig abgesaugt und als Rauchgas abgeleitet. Die gezielte Temperaturführung des Verfahrens führte zu Abbauprodukten, in denen keine giftigen Gase oder Dämpfe feststellbar waren. Sofern bei bestimmten Beschichtungsstoffen mit der Entstehung schädlicher Abgase zu rechnen ist, können diese im Anschluß an die Behandlungsanlage beispielsweise durch Filtrierung, Gaswäsche oder Nachverbrennung nachbehandelt werden. Hinter der Gasbrenneranlage 2 war eine mit Wasser als Kühlmittel betriebene Kühlstrecke 5 angeordnet, in der die äußere Oberfläche des Stahlrohrs 6 auf etwa 40°C abgekühlt wurde. Die Rohrinnenwand hatte bei Verlassen der Kühlstrecke 5 noch eine Temperatur von etwa 100°C, so daß sich kurz danach in der Rohrwand eine Ausgleichstemperatur von etwa 70°C einstellte. Dadurch trocknete das restliche Kühlwasser auf der Rohroberfläche schnell ab, noch bevor die so behandelten Teile der Rohroberfläche eine Einrichtung zum Stahlstrahlen mit Stahldrahtkorn erreichten. Durch das Stahlstrahlen wurden die noch anhaftenden Abbauprodukte der Kunststoffbeschichtung vollständig von der Stahlrohroberfläche entfernt, so daß die Bedingungen des Reinheitsgrades Sa 2 1/2 erfüllt waren. Während des Durchlaufs durch die gesamte Anlage wurde das Stahlrohr 6 kontinuierlich um seine Längsachse gedreht, wie dies in der Figur durch den Pfeil dargestellt ist. Hierdurch wurde die Gleichmäßigkeit der Erwärmung und Abkühlung über die gesamte Oberfläche (in Umfangsrichtung) sichergestellt. Nach Durchlaufen des erfindungsgemäßen Verfahrens konnten die so behandelten Rohre in bekannter Weise erneut beschichtet werden, wobei die Qualität der Beschichtung das gleiche hohe Niveau hatte wie die erstmals beschichteten Rohre.

Ein wesentlicher Vorteil des erfindungsgemäßen Verfahrens ist es, daß die Entfernung der alten Beschichtung restlos durchgeführt werden kann, wobei die Entstehung gefährlicher Reaktionsprodukte wie beispielsweise Dioxine zumindest weitgehend vermieden wird. Weiterhin ist sichergestellt, daß die Temperatur der Rohrwand trotz der erforderlichen relativ hohen Temperatur für den thermischen Abbau der alten Beschichtung auf ein Niveau begrenzt wird, bei dem noch keine unzulässigen Beeinträchtigungen der technologischen Werte des Stahlrohres oder sonstigen Hohlkörpers (z.B. Druckbehälter) eintreten können.

## Patentansprüche

1. Verfahren zur Entfernung einer organischen Beschichtung auf metallischen Hohlkörpern, insbesondere auf Stahlrohren, die mit einer Epoxyharzgrundschicht und einer darauf angeordneten Schicht aus Äthylen-Copolymerisat versehen sind, wobei die Oberfläche der Hohlkörper mechanisch gereinigt wird für eine erneute Aufbringung einer organischen Beschichtung,
dadurch gekennzeichnet,
daß die Wand der Hohlkörper zunächst durch eine mittelfrequente induktive Erwärmung gleichmäßig über die Wanddicke auf eine Temperatur von mindestens 200 und höchstens 350°C vorerwärmt wird, daß unmittelbar danach die Oberfläche der Beschichtung unter Anwesenheit von Sauerstoff hinsichtlich Intensität und Dauer in der Weise von außen erhitzt wird, daß es bei einer Temperatur von mindestens 400°C und höchstens 550°C in der Beschichtung zu deren thermischem Abbau kommt, ohne daß die sich einstellende Ausgleichstemperatur in der Wand der Hohlkörper einen Wert von 400°C übersteigt, und daß danach die mechanische Reinigung erfolgt.

2. Verfahren nach Anspruch 1,
dadurch gekennzeichnet,
daß die Frequenz bei der induktiven Erwärmung so gewählt wird, daß die Stromeindringtiefe mindestens 60 % der Hohlkörperwand beträgt.

3. Verfahren nach einem der Ansprüche 1 oder 2,
dadurch gekennzeichnet,
daß die von außen erfolgende Erhitzung der Beschichtung mittels eines Gasbrenners durchgeführt wird.

4. Verfahren nach Anspruch 3,
dadurch gekennzeichnet,
daß der Gasbrenner mit Sauerstoffüberschuß betrieben wird.

5. Verfahren nach einem der Ansprüche 3 bis 4,
dadurch gekennzeichnet,
daß als Brenngas Propan, Butan oder Erdgas verwendet wird.

6. Verfahren nach einem der Ansprüche 1 bis 5,
dadurch gekennzeichnet,
daß unmittelbar nach dem thermischen Abbau der organischen Beschichtung die Hohlkörper, insbesondere mittels Wasser, auf eine Ausgleichstemperatur in der Wand von 50 - 100°C abgekühlt werden.

7. Verfahren nach einem der Ansprüche 1 bis 6,
dadurch gekennzeichnet,
daß die mechanische Reinigung durch eine Strahlbehandlung, insbesondere mittels St ahldrahtkörnern, erfolgt.

8. Verfahren nach einem der Ansprüche 1 bis 7,
dadurch gekennzeichnet,
daß die durch den thermischen Abbau freigesetzten Gase abgesaugt und bei Bedarf durch Filtrierung, Wäsche oder Nachverbrennung nachbehandelt werden.

9. Verfahren nach einem der Ansprüche 1 bis 8,
dadurch gekennzeichnet,
daß das Verfahren über die axiale Länge der Hohlkörper kontinuierlich durchgeführt wird.

10. Verfahren nach Anspruch 9,
dadurch gekennzeichnet,
daß die Hohlkörper in einer Schraubenlinienbewegung durch die Stufen des Verfahrens transportiert werden.

11. Vorrichtung zur Durchführung des Verfahrens nach Anspruch 1,
dadurch gekennzeichnet,
daß eine Induktionsspule (1) vorgesehen ist, durch die die Hohlkörper (6) in Längsrichtung transportierbar sind, daß unmittelbar hinter der Induktionsspule (1) eine Gasbrenneranlage (2) angeordnet ist, daß im Bereich der Induktionsspule (1) und der Gasbrenneranlage (2) eine Gasabsauganlage (3) vorgesehen ist und daß hinter der Gasbrenneranlage (2) eine Einrichtung zum Stahlstrahlen (4) angeordnet ist.

12. Vorrichtung nach Anspruch 11,
dadurch gekennzeichnet,
daß zwischen der Gasbrenneranlage (2) und der Stahlstrahleinrichtung (4) eine Kühlstrecke (5), insbesondere eine Wasserkühlung, eingeschaltet ist.

13. Vorrichtung nach Anspruch 11 oder 12,
dadurch gekennzeichnet,
daß eine Transportvorrichtung vorgesehen ist, mittels derer die Hohlkörper (6) in axialer Längsrichtung kontinuierlich, insbesondere unter gleichzeitiger Rotation um ihre Längsachse, durch die Behandlungsstationen (1, 2, 4, 5) transportierbar sind.
